# EUROPÄISCHE PATENTSCHRIFT

(11) **EP 0 818 944 B1**
(45) Veröffentlichungstag und Bekanntmachung des Hinweises auf die Patenterteilung: **13.11.2002**
(21) Anmeldenummer: 97110609.1
(22) Anmeldetag: 28.06.1997
(51) Int. Cl.: H05B 39/04

(54) **Vorrichtung zum Steuern der Intensität des von einem Beleuchtungselement einer Beleuchtunganlage, insbesondere Taschenlampe abgegebenen Lichtes**
Device for controlling the intensity of light especially of a pocket light
Dispositif de réglage de l'intensité lumineuse, en particulier pour lampe de poche

(30) Priorität: 09.07.1996 DE 19627607
(43) Veröffentlichungstag der Anmeldung: 14.01.1998
(73) Patentinhaber: Schmidt, Rudolf, 86316 Friedberg-West (DE); Thalhofer, Augustin, 86863 Langenneufnach-Unterrothan (DE)
(72) Erfinder: Schmidt, Rudolf, 86316 Friedberg-West (DE); Thalhofer, Augustin, 86863 Langenneufnach-Unterrothan (DE)
(74) Vertreter: Munk, Ludwig, Dipl.-Ing.

(56) Entgegenhaltungen:
- EP-A- 0 053 896
- EP-A- 0 093 408
- EP-A- 0 488 002
- DE-A- 4 327 767
- DE-U- 29 615 087
- US-A- 4 668 877
- US-A- 5 511 943

## Beschreibung

Die Erfindung betrifft eine Vorrichtung zum Steuern der Lichtintensität einer Taschenlampe.

Taschenlampen brennen nach dem Einschalten in der Regel mit voller Leuchtkraft, obwohl in vielen Einsatzfällen auch eine reduzierte Leuchtkraft ausreichen würde. Durch den Dauerbetrieb mit maximaler Intensität werden die Lebensdauer der Batterien und des Beleuchtungselements, also der Taschenlampenbirne oder Taschenlampenbirnen beeinträchtigt. Nach ihrer Lebensdauer müssen diese entsorgt werden, bzw. im Fall von wiederaufladbaren Batterien erneut am Netz aufgeladen werden. Hierdurch ist die maximale netzunabhängige Betriebsdauer einer Taschenlampe beschränkt.

Druckschrift D1 (EP-A-0 053 896) offenbart eine Vorrichtung zum Steuern der Lichtintensität mit den Merkmalen des Oberbegrifts des Anspruchs 1. Die DE-A-4 327 767 zeigt eine Schaltung zur Begrenzung des Spannungsabfalls eines Handscheinwerfers.

Davon ausgehend ist es Aufgabe der vorliegenden Erfindung, die Intensität des von einem Beleuchtungselement einer Beleuchtungsanlage, insbesondere einer Taschenlampe abgegebenen Lichts mit einer kostengünstigen, möglichst einfach auch nachträglich anbringbaren Vorrichtung variieren zu können.

Diese Aufgabe wird durch den Anspruch 1 gelöst.

Die als Modul ausgebildete erfindungsgemäße Vorrichtung arbeitet ohne eigene Stromversorgung, da sie die Stromversorgung der Beleuchtungsanlage, insbesondere Taschenlampe, also die Taschenlampenbatterien mit verwendet. Überdies ist sie als Modul sehr einfach, und im Falle einer Taschenlampe sogar ohne jegliche bauliche Veränderungen der Taschenlampe anbringbar. Die verschiedenen Dimm-Stufen, also Intensitäten des vom Beleuchtungselement abgegebenen Lichts werden zwar von einer Schalteinrichtung in der Vorrichtung geschaltet, jedoch ist zum Umschalten der Intensitätsstufen kein eigener Taster, Schalter, oder sonstiges Schaltelement erforderlich, da ein von einem Beleuchtungsschaltelement der Beleuchtungsanlage ausgelöster Steuerungsimpuls von einer Detektionseinrichtung in der Vorrichtung erfaßt wird und beim Erfassen dieses Steuerungsimpulses durch die Detektionseinrichtung diese durch ein Detektionssignal an die Zentralsteuerungseinrichtung letztere veranlaßt, die Schalteinrichtung zum Ansteuern der Leuchtstärke des Beleuchtungselements anzusteuern.

Besonders vorteilhafte Ausgestaltungen der Erfindungen ergeben sich aus den Unteransprüchen.

So ist es vorteilhaft, wenn die Schalteinrichtung zum Steuern der Leuchtstärke in Reihe geschaltet eine von der Zentralsteuerungseinrichtung ansteuerbare Schaltstufe aufweist. Dies ermöglicht eine nahezu verlustfreie Steuerung der Lichtintensität. Dabei kann das Bauteil insbesondere ein einfacher Schalttransitor sein.

Nach einer Ausgestaltung der Erfindung ist in Abhängigkeit von Steuerungssignalen der Zentralsteuerungseinrichtung die Pulsweite des Ausgangsstromes bzw. der Ausgangsspannung der Schaltstufe ansteuerbar. Dies erlaubt eine Intensitätsregelung bei fester Ausgangsfrequenz.

Zweckmäßig ist der von der Detektionseinrichtung detektierbare Steuerungsimpuls eine Unterbrechung des Versorgungsstroms des Beleuchtungselements durch eine Schalteinrichtung inform eines Taschenlampentasters oder eines Taschenlampenschalters mit einem zeitlichen Abstand von letzten Steuerungsimpuls von weniger als dem Umschaltzeitintervall. Somit kann mit dem selben Beleuchtungsschaltelement, also Taschenlampentaster oder Taschenlampenschalter, in Abhängigkeit vom zeitlichen Abstand zur letzten Betätigung entweder eine Veränderung der Lichtintensität des Beleuchtungselements ausgelöst werden oder statt dessen lediglich das Beleuchtungsschaltelement zum Ein- und Ausschalten verwendet werden.

Vorzugsweise ist bei Detektion eines Steuerungsimpulses durch die Detektionseinrichtung durch Schaltsignalabgabe der Zentralsteuerungseinrichtung an die Schalteinrichtung in der Schalteinrichtung die Leuchtstärke des Beleuchtungselements in mehreren Stufen variierbar. Dies ermöglicht eine einfache und reproduzierbare Änderung der Lichtintensität durch die Schaltung in vorgebbaren Stufen.

Ferner ist beim Einschalten der Beleuchtungseinrichtung nach einer bestimmten Zeit, die länger als das Umschaltzeitintervall ist, durch die Schalteinrichtung die Grundlichtstärke, vorzugsweise die maximale Lichtstärke des Beleuchtungselementes einschaltbar. Daß beim Einschalten stets maximale Lichtstärke gewährleistet ist, ist insbesondere bei Verwendung von Taschenlampen im Sicherheitsbereich, wie bei der Polizei, von Bedeutung.

Zweckmäßig ist bei einer Betätigung des Beleuchtungsschaltelements, insbesondere Taschenlampentasters oder Taschenlampenschalters, innerhalb eines Zeitintervalls nach der vorherigen Betätigung, das kleiner als das Umschaltzeitintervall ist, die Lichtstärke des Beleuchtungselements durch die Schalteinrichtung um eine Stufe verringert. Zweckmäßig ist dabei, wenn die erste Stufe 50 % und die zweite Stufe 25 % der maximalen Lichtstärke beträgt, da dies gut brauchbare Dimmstufen ergibt. Bei der Betätigung des Beleuchtungsschaltelementes innerhalb eines Zeitintervalls, das kleiner als das Umschaltzeitintervall ist, wird die Lichtstärke, wenn sie auf der schwächsten Stufe eingestellt ist, durch die Schalteinrichtung auf die maximale Lichtstärke geschaltet, um so ein zyklisches Durchschalten der vorgegebenen Stufen von Lichtintensitäten zu ermöglichen.

Als zweckmäßig hat es sich herausgestellt, wenn das Umschaltzeitintervall eine Sekunde ist.

Die Zentralsteuerungseinrichtung ist einfach und kostengünstig als Mikroprozessor auszubilden. Wenn die Schaltung in SMD (surface mounted device) - Technik, bzw. als Hybridschaltung aufgebaut ist, ist sie sehr billig herstellbar und insbesondere sehr weitgehend miniaturisierbar. Damit kann die Vorrichtung mit sehr geringem Platzverbrauch nachträglich in jede Beleuchtungsanlage, insbesondere Taschenlampe eingelegt werden. Hierfür kann sie insbesondere als sehr flacher Zylinder mit dem Durchmesser von in einer Taschenlampe verwendeten Batterien ausgebildet werden und wie eine Münze oder Tablette hinter diesen Batterien eingelegt werden.

Zur Spannungsversorgung der Schaltung ist ein Puffer vorgesehen, der für eine stabile Spannungsversorgung sorgt. Dabei wird zweckmäßig der von der Zentralsteuerungseinrichtung ansteuerbare Puffer bei aktiviertem Beleuchtungselement in den Phasen der Pulsweiten-Modulation von der Stromversorgung des Beleuchtungselementes aufgeladen, in welchem die ansteuerbare Schaltstufe keinen Ausgangsstrom abgibt. Somit ergibt sich eine zeitliche Aufteilung des Stroms der Stromversorgung, also beispielsweise der Batterien einer Taschenlampe, in eine Aufladung des Puffers und Strom für das Beleuchtungselement. Dabei ist zur Gewährleistung einer stabilen Stromversorgung der elektronischen Schaltung der Vorrichtung von der Schaltstufe während einer Pulsweite von maximal 97 % Ausgangsstrom lieferbar und während der restlichen Zeit der Puffer aufladbar.

Überdies ist auf der Vorrichtung ein Spannungsregler zum Liefern einer konstanten Versorgungsspannung, vorzugsweise von 5 Volt, für die Bauteile der Vorrichtung vorgesehen. Mit einem derartigen Spannungsregler kann beispielsweise bei einer anliegenden Spannung von 2 Volt eine Versorgungsspannung von 5 Volt für die Vorrichtung erzielt werden.

Ferner ist es vorteilhaft, wenn die elektronischen Bauelemente der Schaltung, vorzugsweise mit Harz, vergossen sind, was insbesondere einen Schutz gegen mechanische Stöße und Feuchtigkeitseinwirkungen ergibt. Zweckmäßig überschreitet der Umfang der Vorrichtung nicht den Umfang einer Taschenlampenbatterie für die Taschenlampe, in welcher die Vorrichtung einzusetzen ist, so daß die Vorrichtung einfach eingelegt werden kann.

Wenn die Vorrichtung überdies ein Gehäuse aufweist, ist sie gegen äußere Einwirkungen weiter geschützt. Dabei ist zweckmäßig, wenn die Stirnseiten des Gehäuses Spannungsversorgungsanschlüsse für die Schaltung der Vorrichtung sind oder aufweisen, um eine einfache Spannungsversorgung der elektronischen Bauelemente der Schaltung durch schlichtes Einlegen hinter einer Taschenlampenbatterie zu ermöglichen. Zweckmäßig ist dabei ferner ein Verpolungsschutz, um Zerstörung der Bauelemente zu erreichen, wobei vorzugsweise ein Zweiwegedioden-Anschluß vorgesehen ist, welche unabhängig von der Ausrichtung der Vorrichtung eine zuverlässige Stromversorgung gewährleistet.

Weitere Merkmale und Vorteile der Erfindung ergeben sich aus der Beschreibung eines Ausführungsbeispieles anhand der Zeichnung. Dabei zeigen:
- Figur 1: eine teilgeschnittene Seitenansicht einer Beleuchtungsanlage inform einer Taschenlampe mit einer darin eingelegten erfindungsgemäßen Vorrichtung,
- Figur 2: ein Blockschaltbild einer in eine Taschenlampe eingelegten, erfindungsgemäßen Vorrichtung,
- Figur 3: den Aufbau einer erfindungsgemäßen Vorrichtung mit konventionellen Elektronikbauteilen und
- Figur 4: einen Querschnitt durch eine in SMD-Hyprid-Technik aufgebaute erfindungsgemäße Vorrichtung.

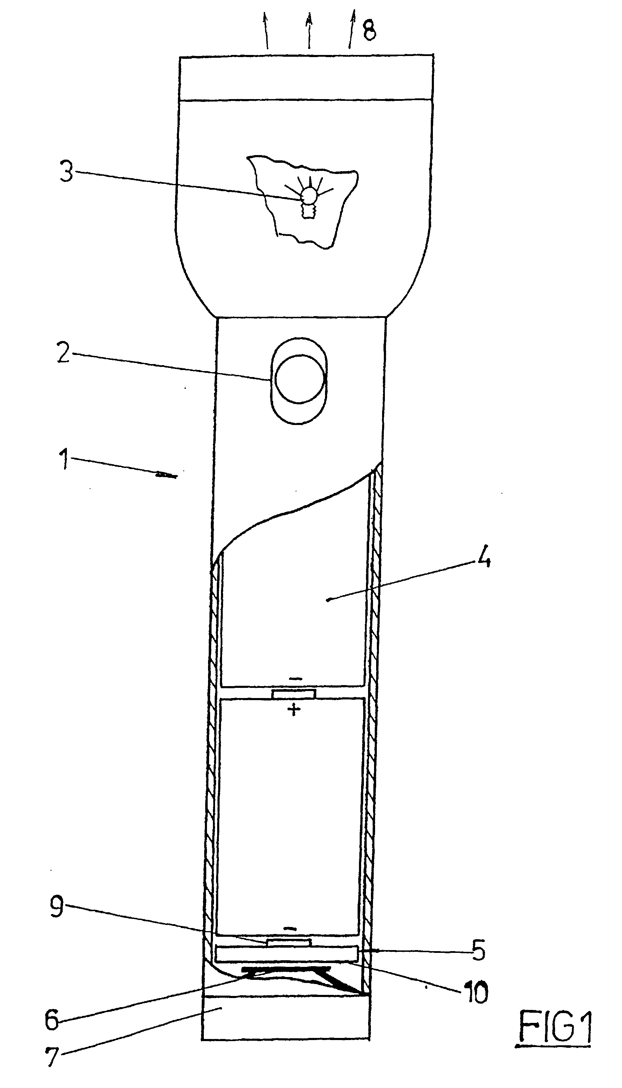

Figur 1 zeigt eine teilgeschnittene Beleuchtungsanlage inform einer Taschenlampe mit einem hier als kombinierter Ein-Ausschalter bzw. -Taster ausgebildeten Beleuchtungsschaltelement 2 und einem Beleuchtungselement 3 in Form einer Glühbirne. Als Stromversorgung 4 sind entweder Wegwerfbatterien oder wiederaufladbare Akkumulatoren vorgesehen. Die erfindungsgemäße als Modul 5 ausgebildete Vorrichtung zum Dimmen der Lichtintensität ist zwischen einer Batterie und einer Kontaktfeder 6 am Verschlußdeckel 7 der Taschenlampe eingelegt.

Das Modul 5 erlaubt die Veränderung der Intensität des von dem hier nur eine Glühbirne umfassenden Beleuchtungselement 3 abgegebenen Lichts durch Betätigung des Beleuchtungsschaltelements 2. Das Beleuchtungsschaltelement 2 ist bei einer Taschenlampe zum Ein/Ausschalten bzw. Tasten des Beleuchtungselements 3 vorgesehen und kann erfindungsgemäß überdies auch zum Variieren der Intensität des vom Beleuchtungselement 3 abgegebenen Lichts verwendet werden.

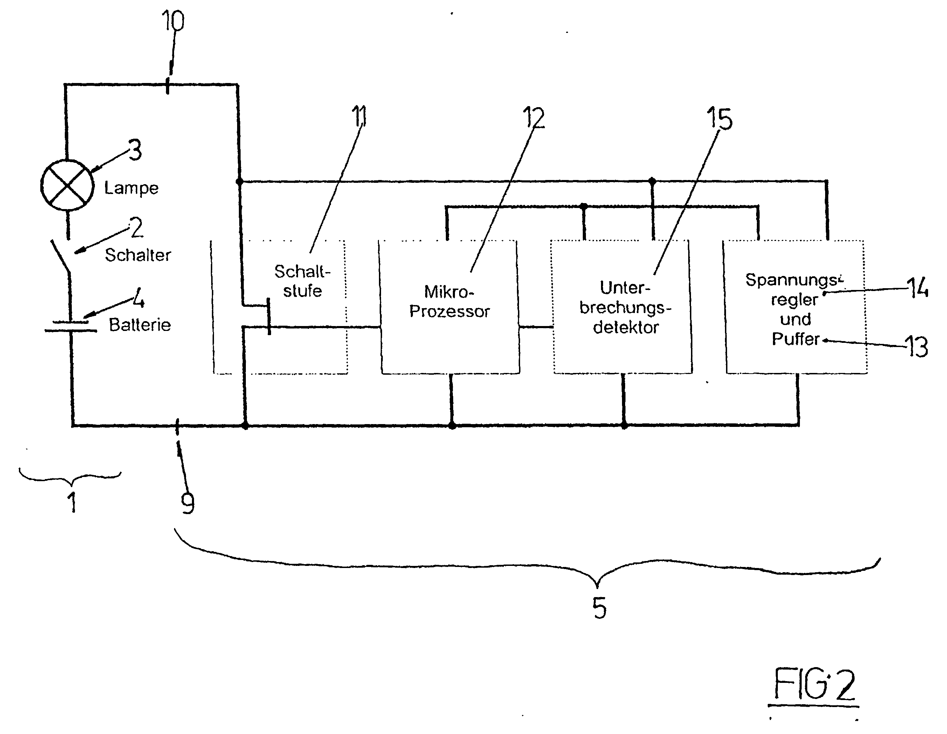

Die Funktion der Schaltung wird anhand des Blockschaltbildes in Figur 2 erläutert. Im linken Bereich von Figur 2 sind ein Beleuchtungselement 3 inform einer Lampe, alternativ mehreren Lampen, ein Beleuchtungsschaltelement 3 inform eines Tasters und eine Stromversorgung inform einer, alternativ mehrerer Batterien etc., dargestellt. Die Reihenfolge der seriell angeordneten Elemente der Taschenlampe kann dabei variieren. Rechts von den Elementen 2, 3, 4 der Taschenlampe sind die Bauteile des erfindungsgemäßen Moduls 5 dargestellt. Dabei umfaßt das erfindungsgemäße Modul 5 zwei in Figur 1 dargestellte Anschlüsse 9, 10, wobei der Anschluß 9 in Figur 1 an einem Pol einer Batterie 4 und der Anschluß 10 an einer mit einem Beleuchtungselement 2 oder einem Schalter 2 verbundenen Kontaktfeder 6 oder am Pol einer Batterie anliegt. Beim erstmaligen Einschalten der Taschenlampe 1 nach längerer Ruhezeit durch den Schalter oder Taster 2 leuchtet die Lampe 3 der Taschenlampe mit ihrer Grundlichtstärke, in der Regel mit ihrer maximalen Lichtstärke. Wenn nun nach dem Einschalten der Taschenlampe 1 innerhalb eines durch die Schaltung vorgegebenen Umschaltzeitintervalls t mit dem Schalter oder Taster 2 die Taschenlampe kurzzeitig nochmals ausgeschaltet, und somit die Stromversorgung der Lampe 3 unterbrochen wird, wird vom Modul 5 die Intensität des von der Taschenlampe abgegebenen Lichts verringert. Wenn dagegen die Taschenlampe nach einem Zeitintervall t nach der letzten Betätigung des Schalters oder Tasters 2 ausgeschaltet und wieder eingeschaltet wird, leuchtet sie wieder mit der Grundlichtstärke, beispielsweise mit der maximalen Lichtstärke. Die Zeitdifferenz zwischen zwei Betätigungen des Schalters 2 kann dabei in verschiedener Weise festgestellt werden, nämlich als Zeitintervall zwischen dem vorherigen Anschalten der Lampe und dem aktuellen Ausschalten, als Zeitdifferenz zwischen dem vorherigen Einschalten und dem aktuellen Einschalten oder als Zeitdifferenz zwischen dem letzten Ausschalten und dem erneuten Einschalten oder als Zeitdifferenz zwischen dem letzten Ausschalten und dem aktuellen Ausschalten. Hier wird das Zeitintervall zwischen dem letzten Einschalten und dem Beginn des erneuten, kurzfristigen Ausschaltens berücksichtigt. Als Umschaltzeitintervall t, also als maximales Zeitintervall zwischen zwei Betätigungen des Schalters 2, innerhalb welchen Zeitintervall eine Veränderung der Lichtintensität durch das Modul 5 erfolgt, und außerhalb welchen Zeitintervalls keine Veränderung der Lichtintensität erfolgt, wird hier eine Sekunde verwendet, da innerhalb einer Sekunde in der Regel erfaßt werden kann, ob die Beleuchtungsintensität verringert werden soll.

Wenn aufgrund einer erneuten Betätigung innerhalb des Umschaltzeitintervalls t das Modul 5 die Lichtintensität verringern soll, wird diese hier in Stufen verringert. Alternativ wäre es auch vorstellbar, bei Betätigung des Schalters oder des Tasters 2 innerhalb des Umschaltzeitintervalls die Verringerung der Lichtintensität kontinuierlich beispielsweise in Abhängigkeit von der Dauer der Unterbrechung der Stromzufuhr zur Lampe durch den Schalter 2 vorzunehmen.

Hier wird die Veränderung der Lichtintensität zyklisch in drei Stufen durchgeführt. Beim ersten Einschalten brennt die Lampe 3 mit maximaler Intensität, beim ersten Herunterschalten durch Betätigung des Schalters oder Tasters 2 innerhalb des Umschaltzeitintervalls seit der letzten Betätigung wird die Leuchtintensität der Lampe 3 um 50 % verringert. Beim zweiten kurzzeitigen Unterbrechen der Stromversorgung der Lampe 3 durch den Schalter 2 wird die Lichtintensität der Lampe 3 wieder um 50 %, also nun auf 25 % der maximalen Lichtstärke verringert. Bei einer weiteren Betätigung des Schalters 2 zum kurzfristigen Unterbrechen der Stromversorgung der Lampe 3 innerhalb des Umschaltzeitintervalls seit der letzten Unterbrechung durch den Schalter 2 wird die Leuchtintensität der Lampe 3 wieder auf die maximale Intensität.

Zur Verringerung der Leuchtstärke der Lampe 3 gegenüber der maximalen Grundleuchtstärke ist im Modul 5 eine Schalteinrichtung 11 vorgesehen. Diese Schalteinrichtung 11 arbeitet hier als nahezu verlustfreier Dimmer. Hiefür weist sie in Reihe geschaltet eine von der Zentralsteuerungseinrichtung 12 ansteuerbare Schaltstufe auf. Zum Erreichen einer maximalen Leuchtstärke der Lampe 3 werden vom Wechselrichter in der Schalteinrichtung 11 Impulse mit einem Tastverhältnis von 97 %, also einer Pulsweite von 97 % abgegeben. Während der restlichen 3 % der Zeit wird die Spannung der Stromversorgung 4 dazu verwendet, um den Puffer 13 aufzuladen. Aus dem Puffer 13 werden die elektronischen Bauelemente des Moduls, während der gesamten Zeit, also auch während der Zeit, in welcher die Spannung der Batterie 4 über die Schaltstufe der Schalteinrichtung 11 weitergeleitet wird, versorgt. Dabei ist zusätzlich zum Puffer ein Spannungsregler 14 vorgesehen, der die für die elektronischen Bauelemente des Moduls 5 erforderliche Spannung von beispielsweise 5 Volt konstant bereitstellt, wofür auch eine Spannung der Stromversorgung 4 von weniger als 5 Volt ausreicht.

Zur Detektion einer Unterbrechung der Spannung durch kurzzeitiges Ausschalten des Schalters 2 ist der Unterbrechungsdetektor 15 vorgesehen, der bei Unterbrechung des Versorgungsstromes des Beleuchtungselements 3 durch die Schalteinrichtung 2 ein Detektionssignal an die als Mikroprozessor ausgebildete Zentralsteuerungseinrichtung 12 gibt.

Die Steuerung der Schalteinrichtung 11 und des Puffers 13, sowie die Auswertung eines Unterbrechungs-Detektionssignales des Unterbrechungsdetektors 15 erfolgt durch den Mikroprozessor 12. Durch den Mikroprozessor 12 wird hier auch festgestellt, ob das Zeitintervall zwischen dem letzten Einschalten und dem aktuellen, vom Unterbrechungsdetektor 15 gemeldeten Unterbrechen der Spannungsversorgung der Lampe 3 kleiner als das vorgegebene Umschaltzeitintervall ist und er entscheidet, falls dies zutrifft, daß der Grad der Dimmung der Schalteinrichtung 11 um eine Stufe verändert werden soll und ändert in diesem Fall die Ansteuerung der Schaltstufe in der Schalteinrichtung 11 also das Tastverhältnis der Pulsweitmodulation.

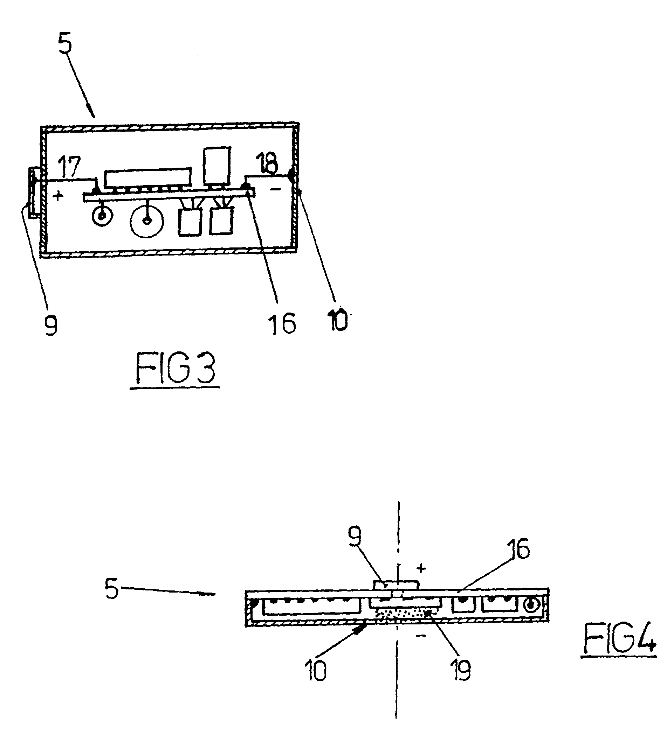

Einige Aufbaubeispiele des erfindungsgemäßen Moduls ergeben sich aus den Figuren 3 und 4. Figur 3 zeigt in geschnittener Ansicht den Aufbau eines erfindungsgemäßen Moduls mit herkömmlichen Bauelementen. Das Modul 5 weist dabei die äußere Form einer für die jeweilige Taschenlampe geeigneten Taschenlampenbatterie auf. Die Spannungsversorgung der elektronischen Bauelemente im Inneren des Moduls 5 erfolgt dabei über die beiden Pole 9, 10 an den Stirnseiten des Gehäuses des Moduls 5. Die Elektronikbauelemente sind dabei auf einer Platine 16 angeordnet, vorzugsweise aufgelötet, an welche auch Anschlußleitungen 17,18 zu den beiden Polen 9, 10 angeschlossen sind.

Besonders vorteilhaft ist eine Ausführung des Moduls 5 in Flachbauweise gemäß Figur 4. Wie auch in Figur 3 weist das Gehäuse der in Figur 4 gezeigten Vorrichtung zylindrische Gestalt auf, wobei der Umfang auch hier zweckmäßig dem Umfang einer für die jeweilige Taschenlampe geeigneten Batterie, also beispielsweise R 14, R 10, R 6 der Flachbatterie etc., entspricht. Das auch hier vorgesehene Gehäuse bietet einen mechanischen und eventuell gegen Feuchtigkeit und Auslaufen der Batterien gerichteten Schutz der elektronischen Bauelemente. Wie in Figur 3 erfolgt auch hier die Spannungsversorgung der elektronischen Bauelemente durch Pole 9, 10 an den Stirnseiten des Moduls 5. Die Pole können wie die Pole einer Taschenlampenbatterie ausgebildet sein, um zuverlässigen Kontakt zu gewährleisten. Der Anschluß der Pole an die die elektronischen Bauelemente tragende Leiterplatte kann hier beispielsweise derart erfolgen, daß der Pol 10 eine leitende Stirnseite umfaßt und leitend auf der Zylinderaußenseite des Moduls 5 bis zur Leiterplatte 16 fortgeführt ist und im Inneren mit dieser Leiterplatte an einem Punkt leitend verbunden ist, von welchem eine Leiterbahn weiterführt. Der Anschluß des anderen Pols 9 kann beispielsweise am Durchtritt durch die Leiterplatte 16 und Anschluß an eine Leiterbahn, beispielsweise auf der Innenseite der Leiterplatte 16 erfolgen.

Die elektronischen Bauelemente sind in SMD (surface mounted device) - Ton / oder Hybridtechnik aufgebaut. Damit läßt sich eine sehr weitgehende Miniaturisierung bei kostengünstiger Ausführung realisieren. Die Bauelemente sind hier mit einer Vergußmasse 19, beispielsweise einem Harz, vergossen, was einen zusätzlichen Schutz gegen mechanische Einwirkungen, Feuchtigkeit oder ausgelaufene Batterien bildet. Bei allen Ausführungsformen ergibt sich ein Schutz für die elektronischen Bauelemente durch das Gehäuse des Moduls 5, wobei im in Figur 4 dargestellten Beispiel das Gehäuse an einer Stirnseite die hier auf der Innenseite die elektronischen Baulemente und Leiterbahn tragende Leiterplatte 16 und am Umfang sowie an der anderen Stirnseite eine Kappe umfaßt, die gleichzeitig an der Stirnseite einen Pol 10 bildet.

Eine nach Figur 4 aufgebaute, sehr flache Vorrichtung ist in eine Taschenlampe ohne Entfernen einer Batterie durch Auflegen hinter der hintersten Batterie unter leichtem Zusammendrücken der Kontaktfeder des Verschlusses der Taschenlampe beim Aufschrauben des Verschlußes auf die Taschenlampe einbringbar. Alle dargestellten Ausführungen weisen den Vorteil auf, daß die Taschenlampe zum nachträglichen Einsetzen der Vorrichtung in keiner Weise verändert werden muß.

Die Ausführungsbeispiele beziehen sich auf den besonders bevorzugten Einsatz in Taschenlampen. Jedoch sind die erfindungsgemäßen Vorrichtungen auch in anderen Beleuchtungsanlagen einsetzbar. Nicht nur in Beleuchtungsanlagen sondern auch für verschiedene andere Anwendungsmöglichkeiten ist das für die Erfindung sehr vorteilhafte aber auch unabhängig davon eigenständig einsetzbare Prinzip des Veränderns/Dimmens eines Stromes durch ein außerhalb des Moduls in einer Anordnung befindliches Schaltelement durch Pulsweitenmodulation oder Pulsfrequenzmodulation im Modul bei Spannungsversorgung des Moduls über einen Puffer aus der Spannung der Anlage von Bedeutung.

## Patentansprüche

1. Vorrichtung zum Steuern der Intensität des von einem Beleuchtungselement (3) einer Beleuchtungsanlage (1) abgegebenen Lichts,
die als seriell zum Beleuchtungselement (3) und zu dessen Stromversorgung (4) anordenbares, zweipoliges Modul (5) ausgebildet ist,
das (5) eine Detektionseinrichtung (15) zum Detektieren eines an einem Beleuchtungsschaltelement (2) der Beleuchtungsanlage (1) ausgelösten Steuerungsimpulses,
eine Schalteinrichtung (11) zum Steuern der Leuchtstärke des Beleuchtungselements (3) und
eine Zentralsteuerungseinrichtung (12) zum Erfassen eines Detektionssignals der Detektionseinrichtung (15) sowie zum Ansteuern der Schalteinrichtung (11) aufweist,
**dadurch gekennzeichnet, daß**
die Beleuchtungsanlage (1) eine Taschenlampe ist, und **daß**
die Vorrichtung einen Energiepuffer (13) und einen Spannungsregler (14) aufweist, der die zum Betrieb des Moduls (5) erforderliche Versorgungsspannung auch dann bereitstellt, wenn die Spannung der Stromversorgung (4) unterhalb dieser erforderlichen Spannung liegt.

2. Vorrichtung nach Anspruch 1, **dadurch gekennzeichnet, daß** ihre Schalteinrichtung (11) zum Steuern der Leuchtstärke eine von der Zentralsteuerungseinrichtung (12) ansteuerbare Schaltstufe in Form eines Transistors, umfaßt.

3. Vorrichtung nach einem der vorhergehenden Ansprüche, **dadurch gekennzeichnet, daß** der von der Detektionseinrichtung (15) detektierbare Steuerungsimpuls eine Unterbrechung des Versorgungsstromes des Beleuchtungselements (3) durch ein Beleuchtungsschaltelement (2), in Form eines Taschenlampentasters oder Taschenlampenschalters, mit einem zeitlichen Abstand vom letzten Steuerungsimpuls von weniger als einem vorgegebenen Umschaltzeitintervall ist.

4. Vorrichtung nach einem der vorhergehenden Ansprüche, **dadurch gekennzeichnet, daß** bei der Detektion eines Steuerungsimpulses durch die Detektionseinrichtung (15) durch Schaltsignale der Zentralsteuerungseinrichtung (12) an die Schalteinrichtung (11) mit der Schalteinrichtung (11) die Leuchtstärke des Beleuchtungselements (3) in mehreren Stufen variierbar ist.

5. Vorrichtung nach einem der vorhergehenden Ansprüche, **dadurch gekennzeichnet, daß** durch Einschalten der Beleuchtungsanlage (1) nach einer Ruhezeit, die länger als das Umschaltzeitintervall ist, durch die Schalteinrichtung (1 1) die Grundleuchtstärke des Beleuchtungselements (3) einschaltbar ist, und **daß** bei einer Betätigung des Beleuchtungsschaltelements (2), innerhalb eines Zeitintervalls nach der vorherigen Betätigung, das kleiner als das Umschaltintervall ist, die Lichtstärke des Beleuchtungselements durch die Schalteinrichtung um jeweils eine Stufe veränderbar ist.

6. Vorrichtung nach Anspruch 5, **dadurch gekennzeichnet, daß** die Grundleuchtstärke der maximalen Leuchtstärke entspricht und vorzugsweise die erste Stufe 50 % und die zweite Stufe 25 % der maximalen Leuchtstärke betragen und daß bei einer Betätigung des Beleuchtungssehaltelements (2) innerhalb eines Zeitintervalls nach der vorherigen Betätigung, das kleiner als das Umschaltzeitintervall ist, die Lichtstärke, wenn sie auf die schwächste Stufe eingestellt ist, durch die Schalteinrichtung (11) auf die maximale Lichtstärke schaltbar ist.

7. Vorrichtung nach einem der vorhergehenden Ansprüche, **.dadurch gekennzeichnet, daß** die Zentralsteuerungseinrichtung ein Mikroprozessor ist, **daß** die Schaltung, deren Bauelemente vergossen sind, in SMD-Technik aufgebaut ist, und **daß** das Modul (5) als Hybrid-Schaltung aufgebaut ist.

8. Vorrichtung nach einem der vorhergehenden Ansprüche, **dadurch gekennzeichnet, daß** der von der Zentralsteuerungseinrichtung (12) ansteuerbare Puffer (13) bei aktiviertem Beleuchtungselement (3) in denjenigen Phasen der Pulsweitenmodulation der Stromversorgung des Beleuchtungselementes (3) aufgeladen wird, in welchen die ansteuerbare Schaltstufe keinen Ausgangsstrom zum Beleuchtungselement durchschaltet, wobei vorzugsweise in der Schaltstufe während einer Pulsweite von maximal 97 % der Ausgangsstrom lieferbar ist und während der restlichen Zeit der Puffer (13) aufladbar ist.

9. Vorrichtung nach einem der vorhergehenden Ansprüche, **dadurch gekennzeichnet, daß** sie ein Gehäuse aufweist, dessen Umfang den Umfang einer für die Beleuchtungsanlage geeigneten Taschenlampenbatterie nicht überschreitet und dessen Stirnseiten Spannungsversorgungsanschlüsse (9, 10) für die elektrische Schaltung der Vorrichtung sind oder aufweisen.

10. Vorrichtung nach Anspruch 9, **dadurch gekennzeichnet, daß** ein Verpolungsschutz, vorgesehen ist.

## Claims

1. A device for controlling the intensity of light of a lighting element (3) of a lighting installation (1)
being formed as a bipolar module (5) arrangable in series with the lighting element (3) and its power supply (4),
said module (5) comprising a detecting device (15) for detecting a control impulse triggered at a light switching element (2) of the lighting installation (1),
a switching device (11) for controlling the luminosity of the lighting element (3) and
a central control device (12) for detecting a detecting signal of the detecting device (15) as well as for controlling the switching device (11) **characterized in that**
the lighting installation (1) is a pocket light and that
the device comprises an energy buffer (13) and a voltage regulator (14) providing the supply voltage necessary for the operation of the module (5) also then if the voltage of the power supply (4) is less than said necessary voltage.

2. A device according to claim 1, **characterized in that** its switching device (11) for controlling the luminosity comprises a switching stage in form of a transistor controllable by the central control device (12).

3. A device according to anyone of the preceding claims, **characterized in that** the control impulse detectable by the detecting device (15) is an interruption of the supply power of the lighting element (3) by a light switching element (2) in form of a pocket light push button or pocket light switch within a time interval from the last control impulse being shorter than a predetermined switching interval.

4. A device according to anyone of the preceding claims, charcterized in that with the detection of a control impulse by the detecting device (15) the luminosity of the lighting element (3) is variable in several stages by means of the switching device (11) by switching signals of the central control device (12) to the switching device (11).

5. A device according to anyone of the preceding claims, **characterized in that** the basic luminosity of the lighting element (3) may be switched on by switching on the lighting installation (1) by the switching device (11) after an off-time which is longer than the switching interval, and that with activation of the lighting switching element (2) within a time interval after the preceding activation being shorter than the switching interval the luminosity of the lighting element being changeable at one stage at a time by means of the switching device.

6. A device according to claim 5, **characterized in that** the basic luminosity corresponds to the maximum luminosity and the first stage preferably being 50% and the second stage being 25% of the maximum luminosity and that in case of activaton of the lighting switching element (2) within a time interval after the preceding activation being shorter than the switching interval, the luminosity, if adjusted to the weakest stage, may be switched to the maximum luminosity by means of the switching device (11).

7. A device according to anyone of the preceding claims, **characterized in that** the central control device is a microprocessor, that the circuit, the components of which are cast, is constructed in SMD technique and that the module (5) is constructed as a hybrid-circuit.

8. A device according to anyone of the preceding claims, **characterized in that** with an activated lighting element (3) the buffer being controllable by the central control device (12) is charged in such phases of the pulse width modulation of the power supply in which the controllable switching stage does not switch any output power to the lighting element, in the switching stage during a pulse width of maximum 97% the output power preferably being supplyable and during the remaining time the buffer (13) being rechargeable.

9. A device according to anyone of the preceding claims, **characterized in that** it comprises a housing, the dimensions of which do not exceed the dimensions of a pocket light battery suitable for the lighting installation, and the front surfaces of which are voltage supply connections (9, 10) for the electric circuit of the device or comprise such connections.

10. A device according to claim 9, **characterized in that** a reverse battery is provided.

## Revendications

1. Dispositif de réglage de l'intensité de la lumière émise par un élément d'éclairage (3) d'une installation d'éclairage (1),
ledit dispositif étant réalisé comme module bipolaire (5) qui peut être disposé en série avec l'élément d'éclairage (3) et avec son alimentation de courant (4) et
qui (5) présente un dispositif de détection (15) destiné à détecter une impulsion de commande déclenchée sur un commutateur d'éclairage (2) de l'installation d'éclairage (1),
un dispositif de commutation (11) destiné à régler la luminosité de l'élément d'éclairage (3)
ainsi qu'un dispositif central de commande (12) destiné à détecter un signal de détection du dispositif de détection (15) et à commander le dispositif de commutation (11),
**caractérisé par le fait**
**que** l'installation d'éclairage (1) est une lampe de poche, et que le dispositif présente un tampon d'énergie (13) et un régulateur de tension (14) qui met à la disposition la tension d'alimentation nécessaire au fonctionnement du module (5), lors même que la tension de l'alimentation de courant (4) est inférieure à cette tension nécessaire.

2. Dispositif selon la revendication 1, **caractérisé par le fait que** son dispositif de commutation (11) destiné à régler la luminosité comprend un étage de commutation sous forme d'un transistor, qui peut être commandé par le dispositif central de commande (12).

3. Dispositif selon l'une des revendications précédentes, **caractérisé par le fait que** l'impulsion de commande qui peut être détectée par le dispositif de détection (15) est une interruption du courant d'alimentation de l'élément d'éclairage (3) par un commutateur d'éclairage (2) sous forme d'un bouton-poussoir de lampe de poche ou d'un commutateur de lampe de poche, avec un écart de temps de la dernière impulsion de commande de moins d'un intervalle de temps de commutation donné.

4. Dispositif selon l'une des revendications précédentes, **caractérisé par le fait que**, lors de la détection d'une impulsion de commande par le dispositif de détection (15), la luminosité de l'élément d'éclairage (3) peut être variée en plusieurs degrés au moyen du dispositif de commutation (11) par des signaux de commutation du dispositif central de commande (12) fournis au dispositif de commutation (11).

5. Dispositif selon l'une des revendications précédentes, **caractérisé par le fait que**, en allumant l'installation d'éclairage (1) au bout d'un temps de repos qui est plus long que l'intervalle de temps de commutation, la luminosité de base de l'élément d'éclairage (3) peut être activée par le dispositif de commutation (11), et que, lorsqu'on actionne le commutateur d'éclairage (2) à l'intérieur d'un intervalle de temps après l'actionnement précédent, qui est plus petit que l'intervalle de commutation, l'intensité lumineuse de l'élément d'éclairage peut être variée respectivement d'un degré par le dispositif de commutation.

6. Dispositif selon la revendication 5, **caractérisé par le fait que** la luminosité de base correspond à la luminosité maximale et que, de préférence, le premier degré fait 50 % et le deuxième degré fait 25 % de la luminosité maximale, et que, lorsqu'on actionne le commutateur d'éclairage (2) à l'intérieur d'un intervalle de temps après l'actionnement précédent, qui est plus petit que l'intervalle de temps de commutation, l'intensité lumineuse - lorsqu'elle est réglée au degré le plus faible - peut être mise à l'intensité lumineuse maximale par le dispositif de commutation (11).

7. Dispositif selon l'une des revendications précédentes, **caractérisé par le fait que** le dispositif central de commande est un microprocesseur, que le circuit dont les composants sont scellés est réalisé en technologie des particules montées en surface (SMD), et que le module (5) est réalisé en tant que circuit hybride.

8. Dispositif selon l'une des revendications précédentes, **caractérisé par le fait que**, lorsque l'élément d'éclairage (3) est activé, le tampon (13) qui peut être commandé par le dispositif central de commande (12) est chargé par l'alimentation de courant de l'élément d'éclairage (3) dans les phases de la modulation d'impulsion en largeur dans lesquelles l'étage de commutation qui peut être commandé ne fournit pas de courant de sortie à l'élément d'éclairage, de préférence le courant de sortie pouvant être fourni dans l'étage de commutation durant une largeur d'impulsion de 97 % au maximum et le tampon (13) pouvant être chargé pendant le temps restant.

9. Dispositif selon l'une des revendications précédentes, **caractérisé par le fait qu'**il présente un boîtier dont la circonférence ne dépasse pas la circonférence d'une pile de lampe de poche appropriée à l'installation d'éclairage et dont les côtés frontaux sont ou présentent des raccords d'alimentation en courant (9, 10) pour le circuit électrique du dispositif.

10. Dispositif selon la revendication 9, **caractérisé par le fait que** l'on prévoit une polarisation.
